**Europäisches Patentamt**

**European Patent Office**

**Office européen des brevets**

(19)

(11) Veröffentlichungsnummer: **0 209 557 B1**

## (12) EUROPÄISCHE PATENTSCHRIFT

(45) Veröffentlichungstag der Patentschrift: **08.04.92**

(21) Anmeldenummer: **86900743.5**

(22) Anmeldetag: **24.01.86**

(86) Internationale Anmeldenummer:
**PCT/DE86/00027**

(87) Internationale Veröffentlichungsnummer:
**WO 86/04264 (31.07.86 86/17)**

(51) Int. Cl.5: **B01F 15/04**

(54) **VORRICHTUNG ZUM DOSIEREN VON MINDESTENS EINEM VISKOSEN STOFF.**

(30) Priorität: **24.01.85 DE 3502333**
**16.08.85 DE 3529486**
**14.10.85 DE 3536594**

(43) Veröffentlichungstag der Anmeldung:
**28.01.87 Patentblatt 87/05**

(45) Bekanntmachung des Hinweises auf die
Patenterteilung:
**08.04.92 Patentblatt 92/15**

(84) Benannte Vertragsstaaten:
**AT BE CH DE FR GB IT LI LU NL SE**

(56) Entgegenhaltungen:
**EP-A- 0 120 419     FR-A- 2 425 003**
**FR-A- 2 426 561     US-A- 3 802 805**
**US-A- 3 912 234     US-A- 4 090 695**

**See also references of WO8604264**

(73) Patentinhaber: **REINHART TECHNIK GMBH
UND CO
Waldheimstrasse 3
W-5883 Kierspe(DE)**

(72) Erfinder: **LÜCKHOFF, Peter
Am Nocken 49
W-5883 Kierspe(DE)**

(74) Vertreter: **Steinmann, Otto C. et al
Kanzlei Münich, Steinmann, Schiller Willibaldstrasse 36
W-8000 München 21(DE)**

## Beschreibung

Die Erfindung bezieht sich auf eine Vorrichtung zum Dosieren mindestens eines viskosen Stoffs und insbesondere zum Dosieren der Komponenten von viskosen Mehrkomponenten-Gemischen gemäß dem Oberbegriff des Patentanspruchs 1.

Seit einiger Zeit wird insbesondere unter Umweltschutzgesichtspunkten die Verwendung von lösungsmittelfreien 2-und Mehrkomponentensystemen, beispielsweise sogenannten "High-Solid-Lakken", IMC-Lacken usw. in Betracht gezogen.

## Stand der Technik

Zum Dosieren und Mischen von Mehrkomponentensystemen sind Verfahren und Vorrichtung bekannt, bei denen jede Komponente des viskosen Mehrkomponentengemisches in eine ihr zugeordnete Auspreßeinheit, zumeist eine Kolben/Zylinder-Einheit gefüllt und in einem anschließenden Auspreßvorgang einer Misch- und Abgabeeinheit zugeführt wird. Die Befüllung der Auspreßeinheiten mit den Komponenten erfolgt dabei zumeist mit Förderpumpen bei einem wesentlich niedrigeren Druck als dem Druck, bei dem die Komponenten in dem Auspreßvorgang ausgepreßt werden.

Die Verarbeitung der vorstehende genannten Mehrkomponensysteme, aber auch von Beschichtungsmaterialien zum schweren Korrosionsschutz mit den bekannten Verfahren und Vorrichtungen stößt jedoch - wie erfindungsgemäß erkannt worden ist - aus einer Reihe von Gründen auf Schwierigkeiten:

Die Kompressibilität der einzelnen Komponenten kann insbesondere bei "High-Solid-Lacken", IMC-Lacken etc. stark unterschiedlich sein. Darüberhinaus ist auch das Mischungsverhältnis der einzelnen Komponenten häufig extrem, Mischungsverhältnisse über 10:1 bis 100:1 sind bei derartigen Systemen keine Seltenheit. Gleichzeitig sollen die Komponenten in kleinen und kleinsten Mengen, teilweise von weniger als 1 g dosiert werden.

Versucht man nun Gemische, deren Komponenten große Kompressibilitätsunterschiede aufweisen, mit bekannten Vorrichtungen zu verarbeiten, so führt dies im besten Falle dazu, daß der Anfangsabschnitt der sogenannten "Mischraupe" falsch dosiert ist; bei Dosiermengen im Grammbereich wird jedoch die gesamte Mischraupe unbrauchbar, da der fehlerhaft dosierte Bereich, der beispielsweise nicht richtig aushärtet und/oder Farbunterschiede zeigt, einen großen Anteil an der gesamten Mischraupe hat.

Deshalb ist in der FR-A-2 426 561 eine Vorrichtung zum Dosieren der Komponenten eines viskosen Zweikomponenten-Gemisches vorgeschlagen worden, bei der in den Zylindern der Auspreßeinheiten eine Druckangleichung dadurch erfolgt, daß die Kolben der Auspreßeinheiten vor dem Öffnen der Ventile verschoben werden.

Bei dieser aus der FR-A-2 426 561 bekannten Vorrichtung, von der im übrigen bei der Formulierung des Oberbegriffs des Patentanspruchs 1 ausgegangen worden ist, kann zwar der Druck in den Auspreßeinheiten dem Druck in der nachgeordneten Misch- und Abgabeeinheit vor Beginn des eigentlichen Auspreßvorgangs angeglichen werden, insbesondere bei der taktweisen Dosierung sehr kleiner Mengen bzw. bei der Dosierung sehr genau zu bemessender Mengen treten bei dieser bekannten gattungsgemäßen Vorrichtung Problemen auf:

Da der Druck, mit dem die Auspreßeinheiten gefüllt werden, in der Regel vergleichsweise stark schwankt, ist vor Beginn des Auspreßvorgangs eine Verschiebung der einzelnen Kolben um einen von dem jeweiligen "Befüllzustand" abhängigen Weg erforderlich. Anders ausgedrückt ist die Kolbenstellung vor Beginn des Auspreßvorgangs in der Regel nicht bekannt, so daß auch die ausgepreßte Menge nur dann genau definiert werden kann, wenn der vom Kolben während des Auspreßvorgangs zurückgelegte Weg genau erfaßt wird.

Dies stellt bei der Dosierung kleinster Mengen und/oder bei Dosiervorgängen, bei denen die Mischverhältnisse exakt eingehalten werden müssen, ein sehr ernstes Problem dar.

## Darstellung der Erfindung

Der Erfindung liegt die Aufgabe zugrunde, eine Vorrichtung zum Dosieren mindestens eines viskosen Stoffs und insbesondere zum Dosieren der Komponenten von viskosen Mehrkomponenten-Gemischen derart weiterzubilden, daß auch kleine und kleinste Mengen taktweise sehr genau dosiert bzw. ausgepreßt werden können.

Eine erfindungsgemäße Lösung dieser Aufgabe ist in den Patentansprüchen gekennzeichnet.

Die Erfindung geht von der Erkenntnis aus, daß eine genaue Dosierung insbesondere kleiner Mengen bei einem "taktweisen Austrag" lediglich dann möglich ist, wenn bei jedem Austragen bzw. Auspressen die Stellung des Kolbens der Kolben/Zylinder-Einheit bei Beginn des Auspreßvorgangs genau definiert ist. Deshalb ist erfindungsgemäß eine Druckangleicheinheit vorgesehen, die ohne Bewegung des Kolbens der Kolben/Zylinder-Einheit und bei geschlossenen Ventilen in der Zuführ-und Auspreßleitung den Druck in der Kolben/Zylinder-Einheit auf den Arbeitsdruck der Misch-und Austrageinheit einstellt.

Hierdurch ist eine Druckangleichung ohne Verschiebung des Kolbens möglich, so daß die Ausgangsstellung des Kolbens immer genau definiert ist.

Durch die erfindungsgemäß ohne Bewegung des Kolbens der Kolben/Zylinder-Einheit durchgeführte Druckanpassung wird das Material bei Beginn des Auspreßvorgangs, d.h. bei Beginn der Kolbenbewegung nicht erst komprimiert, so daß man auch bei der erfindungsgemäß ausgebildeten Vorrichtung über die gesamte "Mischraupe" konstante Mischungsverhältnisse erhält. Weiterhin ist die Dosierung auch kleinster Mengen möglich.

Verschiedene Möglichkeiten für die erfindungsgemäß vorgesehene Druckangleicheinheit, die den Druck in den Auspreßeinheiten auf den Wert in der Misch- und Austrageinheit einstellt, sind in den Ansprüchen 2 - 4 gekennzeichnet.

Nach Anspruch 2 kann die Druckangleicheinheit insbesondere dann, wenn der Druck in den Auspreßleitungen kleiner als 10 bar ist, beispielsweise aus einer Steuereinheit für den Förderdruck der Zufuhrpumpen bestehen; z.B. durch eine Drehzahlsteuerung der Zufuhr- bzw. Förderpumpe wird der mittlere Förderdruck der Zufuhrpumpe derart geregelt bzw. gesteuert, daß der Druck in den Zufuhrleitungen gleich dem gewünschten Arbeits- bzw. Auspreßdrucks ist.

Natürlich ist es aber auch möglich, die viskosen Stoffe mit einem höheren Druck als dem Druck in der Misch- und Austrageinheit zuzuführen und nach Beendigung des Füllens der jeweiligen Auspreßeinheit den Druck beispielsweise durch ein Überdrückventil abzusenken (Anspruch 3).

Die in den Ansprüchen 2 und 3 gekennzeichneten Ausbildungen der Druckangleicheinheit sind insbesondere für Auspreßdrücke bis 10 bar, d.h. für vergleichsweise niedrige Auspreßdrücke geeignet, da für diesen Druckbereich billige und zuverlässige Zufuhrpumpen zur Verfügung stehen. IMC-Systeme, High-Solid-Lacke etc. werden aber häufig mit Arbeitsdrücken bis zu mehreren 100 bar verarbeitet. Eine möglichkeit, auch in diesem Druckbereich eine Druckanpassung vor Beginn des Auspreßvorgangs durchzuführen, ist im Anspruch 4 gekennzeichnet.

Danach weist die Druckangleicheinheit für jede Komponente mindestens eine von einer Kolben/Zylinder-Einheit gebildete Druckerhöhungseinheit auf, die mit der Auspreßeinheit über eine Abzweigleitung verbunden ist. Diese erfindungsgemäß als Kolben/Zylinder-Einheit ausgebildete Druckerhöhungseinheit ermöglicht nicht nur ein genaues Dosieren eines oder mehrerer unter Druck abzugebender viskoser Stoffe, sondern ermöglicht auch durch eine zusätzliche Betriebsart die Einhaltung äußerst kurzer Taktzeiten ohne Beeinträchtigung der Dosierqualität:

Die erfindungsgemäße Vorrichtung zum Dosieren von mindestens einem viskosen Stoff und insbesondere zum Dosieren der Komponenten eines Mehrkomponenten-Gemisches stark unterschiedlicher Kompressibilität kann bei Verwendung einer als Kolben/Zylinder-Einheit ausgebildeten Druckerhöhungseinheit in zwei Betriebsarten betrieben werden:

Bei der einen Betriebsart werden zunächst Auspreßzylinder und Druckerhöhungseinheit gleichzeitig mit der zugeordneten Komponente beispielsweise mittels einer Zufuhrpumpe befüllt. Nach dem Abschluß des Befüllvorgangs erfolgt die Druckerhöhung in dem System, während der Druck vom Förderdruck auf den eigentlichen Arbeitsdruck angehoben wird. Nach Beendigung der Druckerhöhung wird mit dem eigentlichen Auspreßvorgang begonnen.

Diese Betriebsart hat den Vorteil, daß das Volumen der Druckerhöhungseinheit im Vergleich zu dem Volumen der Auspreßeinheit vergleichsweise klein sein kann und typischer Weise in der Größenordnung von 5 bis 20 % des Volumens der Auspreßeinheit liegt. Nachteilig ist jedoch, daß die Befüllung des Systems vergleichsweise lange dauert, da die Befüllung mit dem niedrigen von der Förderpumpe aufgebauten Druck erfolgt und anschließend eine Druckanpassung vorgenommen werden muß.

Bei der weiteren Betriebsart wird während des Auspressens der Auspreßeinheit die Druckerhöhungseinheit mittels der Förderpumpe befüllt. Hierbei ist das Ventil zwischen Auspreßeinheit und Druckerhöhungseinheit geschlossen. Nach Beendigung des Auspreßvorgangs wird das Ventil zwischen Druckerhöhungeinheit und Auspreßeinheit geöffnet und die Auspreßeinheit durch Verschieben des Kolben der Druckerhöhungseinheit und nicht mehr mittels der Förderpumpe befüllt. Nach Beendigung des Befüllvorgangs wird das Ventil zwischen Druckerhöhungseinheit und Auspreßeinheit wieder geschlossen und der Auspreßvorgang beginnt von neuem. Bei dieser Betriebsart ergeben sich aus einer Reihe von Gründen sehr kurze Taktzeiten zwischen zwei Applikations-bzw. Auspreßvorgängen:

Zum einen erfordert das Befüllen der Auspreßeinheit wesentlich weniger Zeit, da der Befüllvorgang mit einem wesentlich höheren Druck als bei Befüllung mittels einer Förderpumpe erfolgt. Zum anderen kann auf die Druckerhöhung in der Auspreßeinheit, die ebenfalls Zeit beansprucht, verzichtet werden, da die Befüllung aus der Druckerhöhungseinheit bereits mit dem Arbeitsdruck der Misch- und Austrageinheit erfolgt. Allerdings erfordert diese Betriebsart eine Druckerhöhungseinheit, deren Volumen geringfügig größer als das Volumen der Auspreßeinheit bzw. das pro Auspreßvorgang auszupressende Volumen ist.

Dieser Nachteil wird aber durch die Tatsache mehr als kompensiert, daß bei dieser Betriebsart schnelle Applikationsvorgänge möglich sind: beispielsweise ist es möglich, eine erfindungsgemäße Vorrichtung derart zu betreiben, daß Applikationsvorgänge mit einer Dauer von 5 sec bei einer 1 sec Pause zwischen den Applikationsvorgängen ausgeführt werden können. Damit eignet sich die erfindungsgemäße Vorrichtung auch zum Dosieren und Austragen von schnell aushärtenden Kunststoffen oder Klebern, wie Polyethylen-, Epoxi- und Silikonkleber sowie zur taktweisen Beschichtung von Werkstücken an Fließbändern, wie dies in der Automobil-und Möbelindustrie erforderlich ist.

In der Vergangenheit sind für Dosierprobleme, bei denen Taktzeiten in der Größenordnung von 1 bis 2 sec eingehalten werden müssen, ausschließlich Anlagen eingesetzt worden, die mit mehreren Auspreßeinheiten arbeiten, deren Auspreßzyklen sich überlagern.

Durch die erfindungsgemäße Verwendung der Druckangleicheinheiten als Befüllstationen für die eigentlichen Auspreßeinheiten ist es nun mehr möglich, auch bei derart kurzen Taktzeiten mit Vorrichtungen zu arbeiten, bei denen für jede Komponente nur eine Auspreßeinheit vorgesehen ist.

Hierdurch wird die erfindungsgemäße Vorrichtung so kompakt, daß die Auspreßeinheit sowie die zusätzlichen Kolben/Zylinder-Einheiten beispielsweise an einem Schwenkarm montiert und nahe an die Applikationsstelle gebracht werden können, so daß die Schlauchlänge, mit der das gemischte Material transportiert wird, erheblich verkürzt wird.

Im Anspruch 6 ist eine weitere vorteilhafte Verwendung der erfindungsgemäß aus einer zusätzlichen Kolben/Zylinder-Einheit bestehenden Druckanpassungseinheit gekennzeichnet:
Durch die Verwendung der erfindungsgemäßen Druckerhöhungseinheit ist es möglich, die Vorspannung bzw. den Druck des in den Auspreßzylindern befindlichen Materials auf einen beliebig einstellbaren Druck zu erhöhen. Damit kann kurzfristig die Mengenausbringung variiert werden, so daß beispielsweise bei einer robotergesteuerten Applikation "Mischraupen" der gewünschten Größe bei konstanter Bewegung des "Roboterarms" erzeugt werden können.

Im Anspruch 7 ist eine vorteilhafte Weiterbildung der Erfindung gekennzeichnet, mit der Dosierfehler, wie sie insbesondere nach längeren Betriebszeiten auftreten können, mit größter Wahrscheinlichkeit vermieden werden können:
Erfindungsgemäß ist erkannt worden, daß Dosierfehler bei Anlagen mit Druckanpassungseinheit praktisch immer folgende Ursache haben: Entweder ist während des Befüllvorgangs der Auspreßeinheit das Ventil in der Auspreßleitung nicht oder nicht vollständig geschlossen oder es ist während des Auspreßvorgangs das in der Zufuhrleitung vorgesehene Ventil nicht oder nicht vollständig geschlossen.

In dem einen Fall wird die Auspreßeinheit nicht mit der vorgesehenen Menge an viskosen Stoff befüllt, in dem anderen Fall wird beim Auspreßvorgang Material in die Zuführleitung zurückgepreßt, so daß nur ein Teil des verdrängten Materials zur Abgabevorrichtung gelangt. In beiden Fällen wird nicht die vorgesehene Materialmenge der Abgabeeinheit zugeführt.

Erfindungsgemäß sind deshalb in den Zuführleitungen stromaufwärts der insbesondere als Rückschlagventile ausgebildeten Absperrventile sowie in den Auspreßleitungen stromabwärts der Absperrventile Drucksensoren vorgesenen, die die zeitliche Änderung des Drucks an den jeweiligen Stellen in den Leitungen erfaßen.

Wenn das Absperrventil in der Auspreßleitung vollständig geschlossen ist, darf sich während des Befüllvorgangs der Auspreßeinheit der Druck stromabwärts des Absperrventils nicht ändern. Ändert sich das Ausgangssignal des in der Auspreßleitung vorgesehenen Sensors während der Befüllung der Auspreßeinheit, so ist entweder das zugehörige Absperrventil nicht, oder - beispielsweise aufgrund von Verunreinigungen des Ventilsitzes - nicht vollständig geschlossen. Andererseits darf sich das Ausgangssignal des in der Zuführleitung vorgesehenen Drucksensors während des Auspreßvorgangs nicht ändern, sofern das Ventil in der Zuführleitung korrekt geschlossen ist.

Die erfindungsgemäß vorgesehenen Drucksensoren ermöglichen damit eine exakte Aussage über den Zustand der in den einzelnen Leitungen vorgesehenen Ventile, die - wie erfindungsgemäß erkannt worden ist - in der Praxis die einzige Ursache für Dosierfehler sind.

Bei der in Anspruch 8 gekennzeichneten bevorzugten Weiterbildung der Erfindung ist stromaufwärts von dem in der Zufuhrleitung angeordneten Sensor und stromabwärts von dem in der Auspreßleitung angeordneten Sensor jeweils ein weiteres Absperrventil angeordnet. Diese Ventile werden jeweils gemeinsam mit dem anderen in der jeweiligen Leitung vorgesehenen Ventil geöffnet bzw. geschlossen. Hierdurch wird erreicht, daß der in der Zuführleitung angeordnete Sensor keine beispielsweise von der Zufuhrpumpe herrührenden Druckschwankungen bzw. der in der Auspreßleitung angeordnete Sensor keine beispielsweise von der Abgabevorrichtung herrührenden Druckschwankungen erfaßt, die tatsächlich nicht vorhandene Undichtigkeiten der jeweiigen Ventile und damit Dosierfehler vortäuschen würden.

Dieser erfindungsgemäße Gedanke ist natürlich auch bei Vorrichtungen anwendbar, bei denen für jede Komponente mehrere Auspreßeinheiten vorhanden sind, wie dies beispielsweise in der Deutschen Patentanmeldung P 33 29 296.5 beschrieben ist. Bei derartigen Vorrichtungen wird jeder Auspreßeinheit ein Sensor zugeordnet, der in beide Richtungen durch ein Ventil "abgeschlossen" ist, damit keine von der anderen Auspreßeinheit erzeugten Druckschwankungen Ventilundichtigkeiten vortäuschen können.

## Kurze Beschreibung der Zeichnung

Die Erfindung wird nachstehend anhand von Ausführungsbeispielen unter Bezugnahme auf die Zeichnung näher erläutert, in der zeigen:

Fig. 1 schematisch ein erstes Ausführungsbeispiel,

Fig. 2 eine Abwandlung des in Fig. 1 gezeigten Ausführungsbeispiels, und

Fig. 3 eine Ergänzung des in Fig. 1 gezeigten Ausführungsbeispiels.

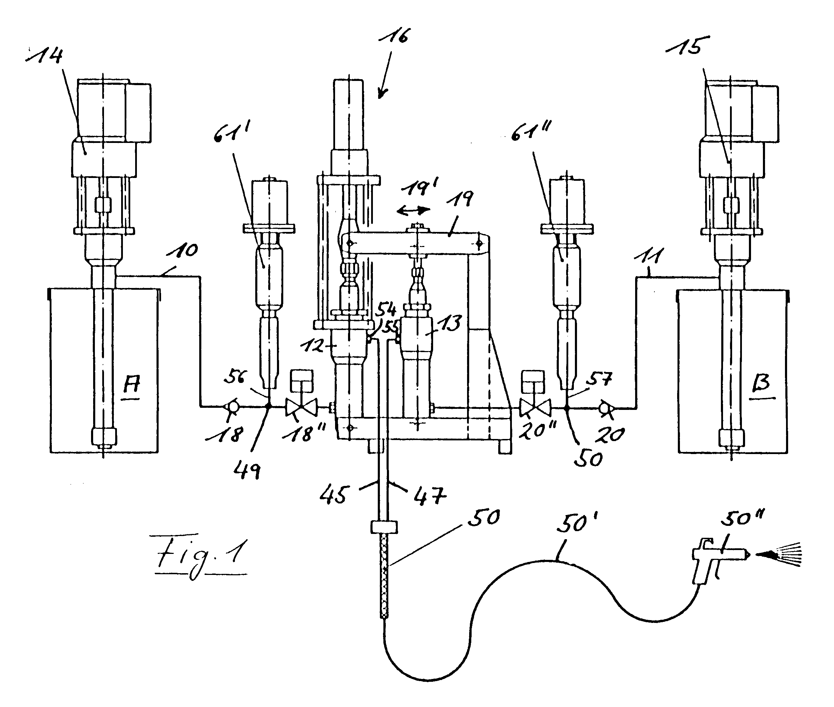

Fig. 1 zeigt schematisch ein erstes Ausführungsbeispiel, bei dem Zuführleitungen 10 und 11 für die Basiskomponente A und den Härter B eines Zweikomponenten-Kunststoffes Druckpumpen 14 bzw. 15, beispielsweise Kolbenpumpen, mit jeweils einem Auspreßzylinder 12 bzw. 13 einer Auspreßeinheit 16 verbinden. In die Leitungen 10 und 11 ist jeweils ein Rückschlagventil 18 bzw. 20 und ein elektrisch oder pneumatisch betätigbares Absperrventil 18'' bzw. 20'' geschaltet. Den einzelnen Auspreßzylindern sind jeweils nur schematisch dargestellte Auspreßkolben zugeordnet. Die äußeren Enden der beiden Auspreßkolben der Auspreßeinheit 16 sind an einem Auspreßbalken 19 derart befestigt, daß durch Verschieben des Auspreßzylinders 13 in Richtung eines Pfeils 19' das Mischungsverhältnis geändert werden kann.

Die Auspreßzylinder 12 bzw. 13 sind jeweils an Auspreßleitungen 45 bzw. 47 angeschlossen, in die automatisch betätigbare Absperrventile 54 bzw. 55 geschaltet sind.

Von Abzweigepunkten 49, 50 führen jeweils Druckleitungen 56, 57 zu Druckerhöhungszylindern 61' und 61'', die Bestandteil von nicht näher dargestellten Druckerhöhungseinheiten sind. In den Druckerhöhungszylindern 61 sind Kolbenstangen eines Druckkolbens nach Art eines Plungers geführt, der in einem Druckzylinder verschiebbar gelagert und zylinderseitig mit Druckmittel, vorzugsweise Druckluft, entgegen der Wirkung von Rückstellfedern beaufschlagbar ist. Die Rückstellfedern können gegebenenfalls wegfallen, wenn der Materialdruck für die Rückstellung des Druckkolbens ausreicht.

Die Wirkungsweise der beschriebenen Vorrichtung ist wie folgt:
Beim füllen der Auspreßzylinder 12 und 13 mit Basiskomponente A bzw. Härter B wird auch jeweils Material in die Leitungen 56 bzw. 57 und in die Druckerhöhungszylinder 61' und 61'' gepreßt, deren Kolbenstangen sich in der oberen Ausgangsstellung bei druckentlastetem Druckzylinder befinden.

Nach dem Füllen des Systems mit Basiskomponente A bzw. Härter B werden noch vor dem Einleiten des eigentlichen Auspreßvorgangs die Druckerhöhungseinheiten betätigt, d.h. in Richtung auf ihre andere Ausgansstellung verschoben, so daß der Druck in den Leitungen 45 und 47 sowie den Auspreßeinheiten 12 und 13 auf den Arbeitsdruck der nicht dargestellten Austrageinheit 50 (Mischer, Schlauch, Austragpistole) angehoben wird.

Hierdurch wird das Material komprimiert, so daß beim eigentlichen Auspreßvorgang aus den Auspreßeinheiten keine zusätzliche Komprimierung des Materials mehr erfolgt. Deshalb ist das ausgetragene Materialvolumen sowohl der Basiskomponente A als auch des Härters B gleich dem Volumen, das die Kolben der Auspreßeinheit "überstreichen". Hierdurch erhält man eine exakte Mischung auch im Anfangsstadium des Austragvorgangs unabhängig davon, wie groß die Unterschiede in der Kompressibilität der einzelnen Materialien sind.

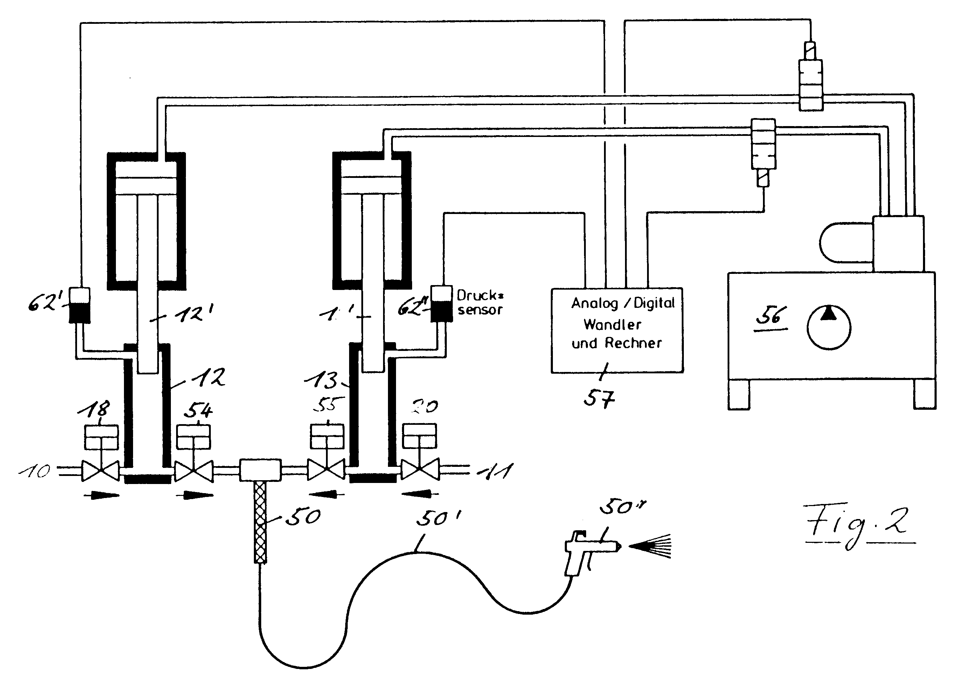

Fig. 2 zeigt zeigt eine Abwandlung des in Fig. 1 beschriebenen Ausführungsbeispiels, bei dem gleiche Teile wie in Fig. 1 mit den gleichen Bezugszeichen versehen sind, so daß auf eine erneute Vorstellung verzichtet werden kann.

An Stelle der Druckerhöhungseinheiten 61 sind Sensoren 62' und 62'' in den Auspreßeinheiten 12 und 13 vorgesehen, die den Druck in den Einheiten messen. Zur Druckerhöhung werden nach dem Füllen der Auspreßeinheiten 12 bzw. 13 zunächst die Kolben 12' und 13' bei geschlossenen Ventilen 18, 20, 54 und 55 soweit verfahren, bis der von den Sensoren gemessene Druck gleich dem Arbeitsdruck der Austrageinheit 50 ist. Dann werden die Ventile 54 und 55 geöffnet. Die Druckmessung sowie die Steuerung der Ventile 54 und 55 und der Beaufschlagungseinheit 56 (zum Verfahren der Kolben, sowie zum Dosieren), die die Kolben 12' und 13' mit Druckluft beaufschlagt, übernimmt eine elektronische Steuerung 57, deren Aufbau mit bekannten Mitteln der Steuerungstechnik realisiert werden kann, so daß auf eine nähere Beschreibung verzichtet werden kann.

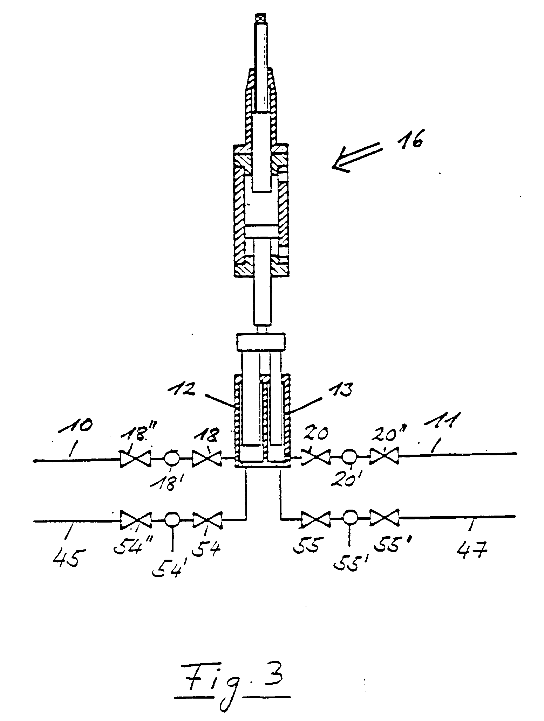

Fig. 3 zeigt eine Ergänzung des in Fig. 1 beschriebenen Ausführungsbeispiels, bei dem gleiche Teile wie in Fig. 1 mit den gleichen Bezugszeichen versehen sind, so daß auf eine erneute Vorstellung verzichtet werden kann.

In die zu den Auspreßzylindern 12 bzw. 13 führenden Leitungen sind jeweils zwei Absperrventile 18 und 18'' bzw. 20 und 20'' geschaltet, die gemeinsam geschlossen und geöffnet werden. Beispielsweise kann eines der Ventile jedes Ventilpaares selbsttätig aufgrund des Rückschlags schließen. Das andere Ventil (auch als Sicherheitsventil bezeichnet) wird dann durch das Schließen des als Rückschlagventils ausgebildeten Ventils zwangsgeschlossen oder ist gegebenenfalls ebenfalls als Rückschlagventil ausgebildet. Natürlich ist es auch möglich, beide Ventile beispielsweise durch eine Steuerung zu betätigen.

Zwischen den beiden Ventilpaaren 18 und 18'' bzw. 20 und 20'' ist jeweils ein Drucksensor 18' und 20' angeordnet, der den Druck in dem Leitungsstück zwischen den jeweiligen Ventilpaaren erfaßt.

Die Auspreßzylinder 12 bzw. 13 sind über Auspreßleitungen 45 und 47 mit einer nicht dargestellten Abgabevorrichtung verbunden, in der die dosierten Komponenten gemischt und ausgetragen werden. In den Auspreßleitungen 45 und 47 befinden sich ebenfalls jeweils zwei Ventile 54 und 54'' bzw. 55 und 55'', zwischen denen jeweils ein Drucksensor 54' bzw. 55' angeordnet ist, der den Druck in dem Leitungsstück zwischen den beiden Ventilen erfaßt. Die Ventile 54 und 55 sind normalerweise automatisch betätigte Absperrventile, die von einer Steuerung bei Beendigung des Auspreßvorgangs geschlossen und bei Beginn eines neuen Auspreßvorgangs wieder geöffnet werden.

Eine den Drucksensoren 18', 20', 54' und 55' nachgeschaltete (nicht dargestellte) Auswerteschaltung erfaßt die zeitliche Änderung der Ausgangssignale der verschiedenen Drucksensoren.

Erfindungsgemäß ist erkannt worden, daß bei Dosiervorrichtung für eine oder mehrere viskose Komponenten in der Praxis nur folgende Ursachen für Dosierfehler auftreten:

- Die Ventile, die die jeweiligen Auspreßzylinder 12 bzw. 13 mit der Abgabeeinheit über die jeweiligen Leitungen verbinden, sind beim Füllen der Zylinder nicht oder nicht vollständig geschlossen, so daß der jeweilige Zylinder nicht mit der vorgesehenen Materialmenge gefüllt wird.
- Die Ventile, die die jeweiligen Auspreßzylinder 12 bzw. 13 mit den Zuführpumpen über die jeweiligen Leitungen verbinden, sind beim Auspressen des dosierten Materials aus den Zylindern nicht oder nicht vollständig geschlossen, so daß beim Auspressen Material in die Zuführleitungen zurückgedrückt wird, und damit weniger Material als die vorgesehene Menge zu der Abgabevorrichtung gefördert wird.

Ursache für ein fehlerhaftes Schließen der Ventile kann dabei beispielsweise eine Fehlbedienung (bei manuell zu bedienenden Ventilen) oder ein verschmutzter Ventilsitz sein, aufgrund dessen das Ventil nicht vollständig schließt.

Bei korrekt geschlossenen Ventilen bleibt der Druck in dem dazwischen befindlichen Leitungsstück und damit das Ausgangssignal des jeweiligen Drucksensors konstant. Eine Änderung des Ausgangssignals der Sensoren 18' und 20' während des Auspreßvorgangs bzw. eine Änderung des Ausgangssignals der Sensoren 54' und 55' während des Zuführvorgangs zeigt damit an, daß mindestens eines der Ventile - sei es aufgrund einer Fehlbedienung oder einer Fehlfunktion - nicht oder nicht vollständig geschlossen ist, und daß es damit zu Dosierfehlern kommen kann.

Als Sensoren kommen alle Druckwandler in Betracht, die bei den in den jeweiligen Anlagen verwendeten Drücken (bis zu mehreren 100 bar) eingesetzt werden können, und die Druckänderungen auflösen können, wie sie bei der jeweiligen Anlage typischerweise dann auftreten können, wenn beispielsweise ein Ventilsitz aufgrund von Verschmutzungen nicht vollständig schließt. Derartige Drucksensoren sind kommerziell erhältlich, so daß auf ihren Aufbau nicht näher eingegangen werden muß.

Als Erfassungsschaltung für die zeitliche Änderung der Ausgangssignale der Drucksenoren kann jede beliebige Schaltung verwendet werden, beispielsweise eine Mikroprozessorschaltung oder eine analog aufgebaute Schaltung, die die zeitliche Änderung der Ausgangssignale der Sensoren in Abhängigkeit vom Betriebszustand der Vorrichtung (Füllen der Zylinder/ Auspressen der Zylinder) erfaßt und bei einer Änderung des Ausgangssignals eines der Sensoren während eines Betriebszustandes, während dessen sich das Ausgangssignal nicht ändern dürfte, ein Alarmsignal gibt. Dieses Alarmsignal kann beispielsweise dazu verwendet werden, eine Mehrkomponenten-Dosier- und Mischvorrichtung abzuschalten und/oder einer Bedienungsperson einen Hinweis auf zu erwartende Dosierfehler zu geben.

Da der Aufbau einer derartigen Auswerteschaltung keine Schwierigkeiten bereitet, kann auf eine Beschreibung der Schaltung verzichtet werden.

Vorstehend ist die Erfindung exemplarisch beschrieben worden. Im Rahmen des allgemeinen Erfindungsgedankens sind die verschiedensten Modifikationen möglich:

Beispielsweise kann die erfindungsgemäße Vorrichtung auch zum Dosieren einer einzigen Komponente oder von mehr als zwei Komponenten eingesetzt werden. Ferner ist es möglich, auf das zusätzliche Ventil, das den jeweiligen Sensor zur Zuführpumpe bzw. zur Abgabevorrichtung hin "abschottet", zu verzichten, wenn aufgrund des Aufbaus der Vorrichtung durch diese Bauelemente keine Druckschwankungen erzeugt werden, d. h. wenn beispielsweise die Abgabevorrichtung während des Füllens der Auspreßzylinder geschlossen ist; und somit keine anderweitig erzeugten Druckschwankungen auftreten können.

Ferner ist es natürlich auch möglich, die erfindungsgemäßen Grundgedanken bei einer Vorrichtung anzuwenden, bei der für jede Komponente mehr als eine Auspreßeinheit vorgesehen ist, wobei die einzelnen Auspreßeinheiten "überlappend" und mit Druckausgleich betrieben werden können.

Eine derartige Vorrichtung ist beispielsweise für hohen Anlagendruck in der deutschen Patentanmeldung P 33 29 296.5 und für mittlere Anlagendruck in der Anmeldung P 34 15 253.9. beschrieben. (Auf den Inhalt dieser Patentanmeldungen wird hiermit Bezug genommen.)

Bei einer derartigen Vorrichtung wird jedem Auspreßzylinder sowohl füllungsseitig als auch auspreßseitig eine Kombination bestehend aus zwei Absperrventilen und einem dazwischen angeordneten Drucksensor zugeordnet. Dabei befinden sich die Absperrventile in dem Leitungsstück, das den zugehörigen Auspreßzylinder mit der für alle Auspreßzylinder für die jeweilige Komponente gemeinsamen Zuführleitung bzw. Auspreßleitung verbindet. Die Auswertung der Ausgangssignale der einzelnen Drucksensoren wird dann in gleicher Weise wie bei Vorrichtungen vorgenommen, bei denen nur eine Auspreßeinheit pro Komponente vorgesehen ist.

Auch ist es möglich, in der Druckangleicheinheit einen Sensor anzuordnen, der anzeigt, wenn die Druckerhöhung nicht erzielt werden konnte. Dies weist nämlich darauf hin, daß ein Auspreßzylinder beispielsweise wegen Materialmangels nicht ordnungsgemäß gefüllt worden ist. Eine extreme Druckerhöhung in den Leitungssystemen, wie sie bei herkömlichen Systemen immer dann auftritt, wenn beispielsweise die Stammkomponente ausgeht, kann hierdurch wirkungsvoll vermieden werden.

Ferner ist es möglich, auf den Balken zu verzichten, der die beiden Auspreßeinheiten verbindet und die beiden Kolben/Zylindereinheiten starr zu koppeln. In diesem Falle ist jedoch das Mischungsverhältnis durch die Geometrie der Auspreßeinheiten festgelegt.

Zum Antrieb der einzelnen Einheiten können nahezu beliebige Systeme eingesetzt werden. Beispiele sind in den vorstehend genannten deutschen Patentanmeldungen angeführt.

## Patentansprüche

1. Vorrichtung zum Dosieren mindestens eines viskosen Stoffs und insbesondere zum Dosieren der Komponenten von viskosen Mehrkomponenten-Gemischen, bei der jede Komponente über mit Ventilen (18, 20) versehene Zuführleitungen (10, 11) in eine als Kolben/Zylinder-Einheit ausgebildete Auspreßeinheit (12, 13) gefüllt und in einem anschließenden Auspreßvorgang einer Misch- und Austrageinheit (50) zugeführt wird, wobei vor Beginn des eigentlichen Austragvorgangs der Druck in der Auspreßeinheit dem Arbeitsdruck der Misch- und Abgabeeinheit angleichbar ist, dadurch **gekennzeichnet**, daß bei geschlossenen Ventilen (18, 20) in der Zuführ-und Auspreßleitung und ohne Bewegung des Kolbens der Kolben/Zylinder-Einheit (12, 13) der Druck in der Kolben/Zylinder-Einheit durch eine Druckangleicheinheit auf den Arbeitsdruck der Misch- und Austrageinheit einstellbar ist, so daß der Kolben der Kolben/Zylinder-Einheit beim Auspreßvorgang immer einen vorgegebenen Weg überstreicht.

2. Vorrichtung nach Anspruch 1, dadurch **gekennzeichnet**, daß die Druckangleicheinheit den Förderdruck der Zuführpumpen (14,15) derart steuert, daß der mittlere Druck in den Zuführleitungen (10, 11) gleich dem mittleren Druck in den Auspreßleitungen (45, 47) ist.

3. Vorrichtung nach Anspruch 1, dadurch **gekennzeichnet**, daß die Druckangleicheinheit Überdruckventile in den Auspreßeinheiten (16, 17) aufweist, die beim Arbeitsdruck der Misch- und Austrageinheit öffnen.

4. Vorrichtung nach Anspruch 1, dadurch **gekennzeichne**t, daß die Druckerhöhungseinheiten (61, 61') mit den Zuführleitungen (10, 11) der beiden Auspreßeinheiten (12, 13) über je eine Abzweigleitung (56, 57) verbunden sind, und Kolben/Zylindereinheiten zur Druckerhöhung aufweisen, die mit der jeweiligen Komponente beim Befüllen des Systems füllbar und mit einem Druckmittel derart beaufschlagbar sind, daß bei geschlossenen Ventilen in der Zuführ- und Auspreßleitung der Druck auf einen bestimmten Druck einstellbar ist.

5. Vorrichtung nach Anspruch 4, dadurch **gekennzeichnet**, daß die Befüllung der Auspreßeinheit über die weitere Kolben/Zylinder-Einheit erfolgt.

6. Vorrichtung nach einem der Ansprüche 4 oder 5, dadurch **gekennzeichnet**, daß zur Erhöhung der Abgabeleistung bei konstantem Querschnitt der Misch- und/oder Abgabeeinheit der Arbeitsdruck in der Auspreßeinheit mittels der zweiten Kolben/Zylinder-Einheit nach einem vorgegebenen Programm steuerbar ist.

7. Vorrichtung nach einem der Ansprüche 1 bis 6,
dadurch **gekennzeichnet**, daß zum Erfassen von Dosierfehlern stromaufwärts von den Ventilen (18, 20) in der Zuführleitung (10, 11) und stromabwärts von den Ventilen (54, 55) in der Auspreßleitung jeweils ein Drucksensor (18', 20', 54', 55') vorgesehen ist, und daß eine Auswerteschaltung den zeitlichen Verlauf der Ausgangssignale der Drucksensoren in Zuordnung zum Betriebszustand der Dosiervorrichtung erfaßt und bei in bestimmten Betriebszuständen unzulässigen Druckschwankungen ein Alarmsignal abgibt.

8. Vorrichtung nach Anspruch 7,
dadurch **gekennzeichnet**, daß stromaufwärts von dem Sensor in der Zuführleitung jeweils ein weiteres Ventil (18'', 20'', 54'', 55'') vorgesehen ist, das gemeinsam mit dem anderen Ventil in der jeweiligen Leitung betätigbar ist.

9. Vorrichtung nach einem der Ansprüche 4 bis 8,
dadurch **gekennzeichnet**, daß zum Erfassen von Materialmangel in der Druckerhöhungseinheit jeweils ein Sensor vorgesehen ist, der das Durchschlagen des Kolbens der Druckerhöhungseinheit erfaßt.

**Claims**

1. Device for metering at least one viscous substance, and in for metering the components of viscous polycomponent mixtures, wherein each component is charged, through delivery lines (10, 11) provided with valves (18, 20), into a into a squeezer unit (12, 13) configured as plunger/piston unit and delivered to a mixing and discharge unit (50) in a subsequent squeezing operation, wherein, prior to the beginning of the actual discharge operation proper, the pressure in said squeezer unit may be adapted to the operating pressure prevailing in said mixing and discharge unit **characterized** in that the pressure in said plunger/piston unit (12, 13) is adapted to be set by a pressure adapter unit to the level of the operating pressure in said mixing and discharge unit, with the valves (18, 20) being closed in said delivery and squeezing line and without displacement of the plunger in said plunger/cylinder unit), such that said plunger of said plunger/cylinder unit will always cover a predetermined distance.

2. Device according to Claim 1,
**characterized** in that said pressure adapter unit controls the delivery pressure of said delivery pumps (14, 15) in a way that the mean pressure level in said delivery lines (10, 11) equals the mean pressure level in said squeezing lines (45, 47).

3. Device according to Claim 1,
**characterized** in that said pressure adapter unit includes excess-pressure valves in said squeezer units (16, 17), which open at the operating pressure level of said mixing and discharge unit.

4. Device according to Claim 1,
**characterized** in that the pressure-augmenting units (61, 61') communicate with said delivery lines (10, 11) of said two squeezer units (12, 13) through one branch line each (56, 57) and include plunger/cylinder units for pressure increase which are adapted to be filled with the respective component when the system is charged and to be controlled through a pressure medium in such a way that, with the valves in said delivery and squeezing lines being closed, the pressure can be set to a predetermined level.

5. Device according to Claim 4,
**characterized** in that said squeezing unit is charged through said additional plunger/cylinder unit.

6. Device according to any of Claims 4 or 5,
**characterized** in that the operating pressure in said squeezer unit can be controlled by means of said second plunger/cylinder unit in accordance with a specified programme so as to increase the discharge rate at a constant cross-section of said mixing and/or discharge unit.

7. Device according to any of Claims 1 to 6,
**characterized** in that one pressure sensor each (18', 20', 54', 55') is provided upstream of said valves (18, 20) in said delivery line (10, 11) and downstream of said valves (54, 55) in said squeezing line for detection of incorrect metering, and that an evaluation circuitry detects the output signals from the pressure sensors on a time base and in correlation to the operating state of said metering system and issues an alarm whenever inadmissible pressure variations occur during specified operating states.

8. Device according to Claim 7,
**characterized** in that one additional valve each (18'', 20'', 54'', 55'') is provided upstream of said sensor in said delivery line, which valve is adapted to be operated jointly with the other valve in the respective line.

9. Device according to any of Claims 4 to 8, **characterized** in that one sensor each is provided to detect shortage of material in said pressure-augmenting unit, which sensor detects the full penetration of said plunger in said pressure-augmenting unit.

**Revendications**

1. Dispositif pour le dosage d'au moins une substance visqueuse, et en particulier pour le dosage des constituants des mélanges visqueux à plusieurs constituants, dans laquelle chaque constituant est rempli dans une unité de chasse (12, 13) configurée sous forme d'une unité piston/cylindre, par des conduites d'amenée (10, 11) pourvues des soupapes (18, 20), et, dans un processus de chasse suivant, alimenté à une unité de mélange et distribution (50), la pression dans l'unité de chasse étant adaptable au niveau de la pression de travail de l'unité de mélange et distribution avant le début du processus de décharge proprement dit, **caractérisé** en ce que, à soupapes (18, 120) fermées dans la conduite d'amenée et de chasse et sans mouvement du piston de l'unité piston/cylindre (12, 13), la pression dans l'unité piston/cylindre se peut mettre au niveau de la pression de travail de l'unité de mélange et distribution de façon que le piston de l'unité piston/cylindre parcourt toujours une distance déterminée.

2. Dispositif selon la revendication 1, **caractérisé** en ce que l'unité d'adaptation de la pression règle la pression d'amenée des pompes d'alimentation (14, 15) d'une façon que la pression moyenne dans les conduites d'amenée (10, 11) soit égale à la pression moyenne dans les conduites de chasse (45, 47).

3. Dispositif selon la revendication 1, **caractérisé** en ce que l'unité d'adaptation de pression comprend des soupapes de surpression dans les unités de chasse (16, 17), qui s'ouvrent à la pressions de l'unité de mélange et distribution.

4. Dispositif selon la revendication 1, **caractérisé** en ce que les unités d'adaptation de pression (61, 61') se trouvent en communication avec les conduites d'amenée (10, 11) desdites deux unités de chasse (12, 13) chacune par une conduite de branchement (56, 57), et qu'elles comprennent des unités piston/cylindre pour augmenter la pression, lesdites unités piston/cylindre étant adaptées pour être remplies en le constituant respectif au remplissage du système et commandées par un fluide sous pression d'une manière que la pression dans la conduite d'amenée et de chasse peut se mettre à un niveau de pression défini à des soupapes fermées.

5. Dispositif selon la revendication 4, **caractérisé** en ce que le remplissage de l'unité de chasse se fait par l'unité piston/cylindre additionnelle.

6. Dispositif selon l'une quelconque des revendications 4 ou 5, **caractérisé** en ce que la pression de travail dans l'unité de chasse peut être réglée selon un programme déterminé pour augmenter le débit de l'unité de mélange et/ou de l'unité de distribution à section transversale constante.

7. Dispositif selon l'une quelconque des revendications 1 à 6, **caractérisé** en ce que un capteur de pression respectif (18', 20', 54', 55) est installé en amont desdites soupapes (18, 20) dans la conduite d'amenée (10, 11) et en aval des soupapes (54, 55) dans la conduite de chasse, pour détecter un dosage incorrect, et en ce qu'un circuit d'analyse détecte les variations des signaux de sortie des capteurs de pression en fonction du temps et en fonction du régime du dispositif de dosage, en émettant une alerte quand des variations en pression s'arrivent qui sont inadmissible au certains régimes.

8. Dispositif selon la revendication 7, **caractérisé** en ce qu'une autre soupape (18'', 20'', 54'', 55'') est installée en amont dudit capteur dans la conduite d'amenée, qui est adaptée à être commandée en commun avec l'autre soupape dans la conduite respective.

9. Dispositif selon l'une quelconque des revendications 4 à 8, **caractérisé** en ce qu'un capteur est installé dans l'unité de surpression pour détecter l'insuffisance de matière en détectant le passage en travers complet du piston de l'unité de surpression.

Fig. 1

Fig. 2

62'  12'  1'  62"  Druck= sensor

Analog / Digital Wandler und Rechner

56

57

18  54  55  20

10  11

50  50'  50"

EP 0 209 557 B1

*Fig. 3*